# EUROPEAN PATENT SPECIFICATION

(11) **EP 3 999 237 B1**
(45) Date of publication and mention of the grant of the patent: **03.01.2024**
(21) Application number: 20753576.6
(22) Date of filing: 17.07.2020
(51) Int. Cl.: B01L 3/00, B65D 41/00, B65D 81/32

(54) **CONTAINER FOR BIOLOGICAL SAMPLES**
BEHÄLTER FÜR BIOLOGISCHE PROBEN
RÉCIPIENT POUR ÉCHANTILLONS BIOLOGIQUES

(30) Priority: 19.07.2019 EP 19382610
(43) Date of publication of application: 25.05.2022
(73) Proprietor: Illinois Tool Works Inc., Glenview, IL 60025 (US)
(72) Inventor: CAUBET CANALS, Marina, Glenview, IL 60025 (US); MARTIN SANCHEZ, Laura, Glenview, IL 60025 (US); LACOMA MARTINEZ, Montserrat, Glenview, IL 60025 (US); FORTUNY CUADRA, Aliex, Heribert, Glenview, IL 60025 (US)
(74) Representative: HGF
(86) International application number: PCT/US2020/042463
(87) International publication number: WO 2021/016060

(56) References cited:
- US-A- 6 045 004
- US-A1- 2006 115 385
- US-A1- 2009 100 944
- US-A1- 2018 128 718

## Description

The present invention refers to a container assembly for biological samples, which permits to collect, preserve and transport a biological sample, such as e.g. a tissue sample.

### Background of the invention

Histopathological analysis protocols require that the tissue samples obtained from patients must be treated quickly using a fixative liquid or other suitable fluid as a preservative agent, prior to sending the sample to the laboratory where it is processed.

The formaldehyde is the most commonly fixative liquid used, and its toxic effects to humans or other lifeforms are well known.

Currently, the clinician is exposed to formaldehyde when he/she introduces the sample (biopsy) into the container assembly with formaldehyde.

Nowadays, after taking the sample, the hospital staff, opens the container assembly containing the formaldehyde, places the sample inside, closes the container assembly and send it to the pathology laboratory.

Considerable risks of spilling and inhalation of formaldehyde exist in this procedure, which constitutes a danger to the health of the user.

US2009100944A1 relates to a container for storing a biological sample for molecular diagnostic testing and/or histological testing. US6045004A relates to a dispensing structure for a container that has an opening to the container interior.

Consequently, one aim of the present invention is to provide an improved container assembly for biological samples that is suitable to protect the healthcare professional from direct contact with the fixative liquid and that allows for a relatively safe collection, preservation and transport of biological samples in a fixative liquid.

### Summary of the invention

The invention is defined in the appended claims.

According to an aspect of the invention, there is provided a container assembly for handling a biological sample, comprising:
a first receptacle and a second receptacle, each one configured to receive and contain a fluid;
a coupling member, adapted to operably couple said first receptacle and said second receptacle, so as to provide a sealed fluid passage between said first and second receptacle;
at least one self-sealing dispensing valve, operably mounted within said fluid passage of said coupling member, adapted to allow bi-directional fluid flow at a predetermined fluid pressure, and
at least one barrier member, operably mounted within said fluid passage of said coupling member at an output of said first receptacle, configured to prevent solids of a predetermined size to pass from said first receptacle into said second receptacle,
wherein said at least one self-sealing dispensing valve comprises a resilient membrane having at least one substantially central slit adapted to open at a predetermined fluid pressure.

This provides the advantage of allowing to preserve and safely transport the biological sample(s) collected for histopathological analysis. Furthermore, the presence of the self-sealing dispensing valve is an easy to use and simple to manufacture valve configured to switch between a fluid seal and fluid conduit and prevent spillages and potential inhalation of the conservation or fixative fluid (e.g. formaldehyde) by the staff handling the container assembly. As a result, the fixative liquid can be safely transferred between the first and second receptacles, wherein the sample, when present in the first receptacle, is contained in the first receptacle.

Advantageously, said barrier member may further comprise a protrusion extending from a surface facing said first receptacle and that is adapted to receive and position the biological sample when placing the biological sample onto said at least one barrier member.

Preferably, said protrusion may have a sharp-edged substantially triangular cross-section.

This provides the advantage of allowing a more efficient placement of the sample into
one of the receptacles. For example, transferring a renal or cerebral tissues biopsy specimens into a container assembly with preservation fluid is normally done with a spatula, however, the handling of such a tissue is difficult due to its slippery texture. The protrusion is configured to aid the user and allow for a more efficient transfer of the tissue from the spatula onto the barrier member. In particular, the sharp uppermost edge allows a more controlled scraping off of the biopsy sample from the spatula, as well as, prevent undesired movement of the sample when placed onto the barrier member before sealing the container assembly.

Advantageously, said first receptacle and said second receptacle may at least partially be made of a resiliently deformable material. Preferably, said resiliently deformable material may be a polymer. Even more preferably, said polymer may be any one of polyethylene terephthalate, high-density polyethylene and polyvinyl chloride.

The resiliently deformable material allows the user to change the volume and fluid pressure inside any one of the receptacles creating a pressure difference between the two receptacles and moving the preservation fluid from one receptacle into the other. Here, the applied pressure is sufficient to squeeze the receptacle, open the valve and thus promote the flow of the fluid between the receptacles.

Advantageously, any one of said first and said second receptacles may be made from a transparent material. This provides the advantage of allowing visual inspection of the state of the biological sample when inside the receptacle. Further, the transparent receptacles allow the user to estimate the level of preservation fluid in any one of the receptacles during sampling, transporting and storing the sample(s).

Advantageously, said coupling member may comprise a threaded inner surface adapted to mountably engage with a corresponding threaded outer surface of said first and second receptacle. This provides the advantage of an effortless separation of the receptacles from the coupling member, thus, removing the need to use hinged or clamped connection, which requires axial alignment to provide a sealed closure.

Advantageously, said coupling member may further comprise an internal housing configured to retainingly receive said at least one self-sealing dispensing valve. This provides the advantage that the valve can be easily replaced if damaged or lost. The components of the container assembly may also be made of the autoclavable materials, thus further allowing reusing the assembly.

Advantageously, the at least one self-sealing dispensing valve comprises a resilient membrane having at least one substantially central slit adapted to open at a predetermined fluid pressure. Preferably, said membrane may comprise at least three slits radially arranged, so as to form three resilient flaps adapted to open at a
predetermined fluid pressure. Even more preferably, said at least one self-sealing dispensing valve may be made from a resilient silicone material.

The use of inert material prevents reaction with the preservation fluid and/or with the biological sample. Furthermore, the valve allows for a controlled bidirectional flow between the two receptacles providing a secure, leak resistant seal.

Advantageously, said barrier member may be a grid having a predetermined grid spacing. The size and spacing of the grid is configured to allow for retaining the biological sample within the receptacle filled with the preservation fluid and prevent the sample transfer between the receptacles.

Advantageously, said protrusion may be located adjacent to said grid.

### Brief description of the drawings

Embodiment(s) of the invention will now be described, by way of example only, with reference to the accompanying drawings, in which:
**Figure 1** is a frontal view of the container assembly according to the present invention in an exploded view;
**Figure 2** is a view of the central portion of the container assembly according to the present invention, showing the coupling member in a section view;
**Figure 3** is a perspective view of the central portion of the container assembly according to the present invention, with the second receptacle separated from the coupling member;
**Figure 4** is a perspective view of the central portion of the container assembly according to the present invention, with the first receptacle separated from the coupling member;
**Figure 5** is a frontal view of the container assembly according to the present invention in the closed position;
**Figure 6** is a perspective view of the coupling member from the sample side, particularly showing the barrier member and the protrusion, and
**Figure 7** is an illustration of an example embodiment of the self-sealing dispensing valve (a) top view and (b) cross-sectional side-view.

### Detailed Description

The described example embodiment relates to a container assembly having receptacles and a coupling member of a specific shape and design. However, the invention is not restricted to the described shapes and designs but may also use any other suitable shape/design of the receptacles, coupling and valve.

Certain terminology may be used in the following description for convenience only and is not limiting. The words 'right', 'left', 'lower', 'upper', 'front', 'rear', 'upward', 'down' and 'downward', 'top' and 'bottom' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, relative positional terms, such as, 'distal', 'proximal', 'lateral' and 'medial' are understood in their normal meaning and in relation to a specific element being described. In particular, these terms designate directions in relation to the tool or user end, e.g. proximal is in a direction towards the installation tool or user, wherein distal refers to the direction away from the installation tool or user.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

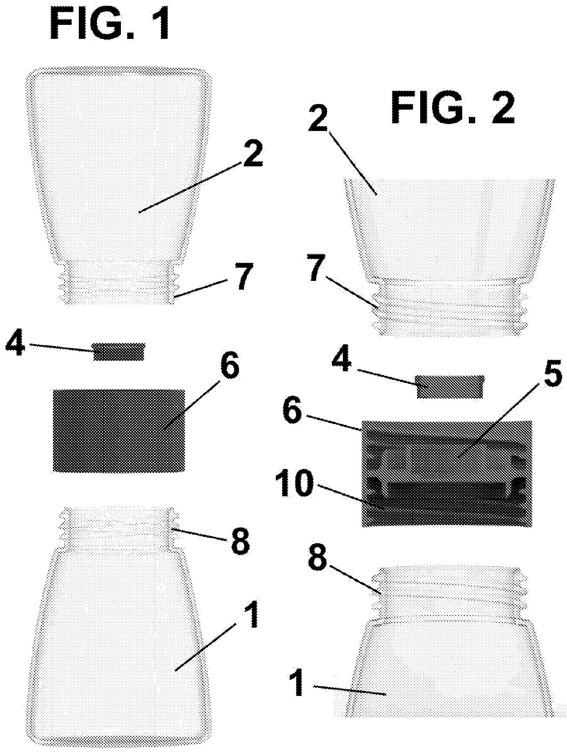

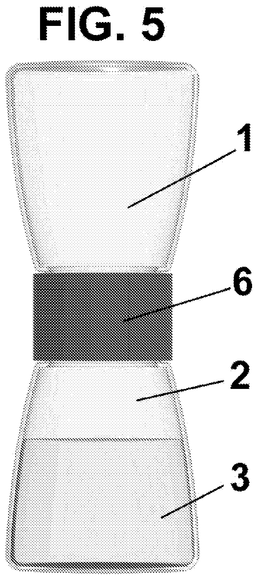

Referring now to Figures 1 to 7, a preferred embodiment of the container assembly for biological samples is shown. example embodiment of the container assembly comprises a first receptacle 1 for placing a biological sample and a second receptacle 2 for initially placing a fixative liquid 3, e.g. formaldehyde (see Figure 5). Preferably, the receptacles 1, 2 are made of a resiliently deformable polymeric material, such as, polyethylene terephthalate, high-density polyethylene and polyvinyl chloride, or silicone rubber, though, other medical grade autoclavable polymeric compounds can also be used. These materials are flexible and are therefore suitable for applying an external force to the receptacle(s) 1, 2 that is sufficient to deform the walls of the receptacle 1, 2 and move the fixative liquid 3 from one receptacle 1 into the other 2.

A coupling member 6 is operably coupleable between the first and second receptacle 1, 2 so as to fluidly sealingly connect the two receptacles 1, 2 and provide a fluid passage between the first and second receptacle 1, 2. A self-sealing dispensing valve 4 is provided within the fluid passage of the coupling member 6 allowing selective bi-directional fluid flow between the first and second receptacle 1, 2.

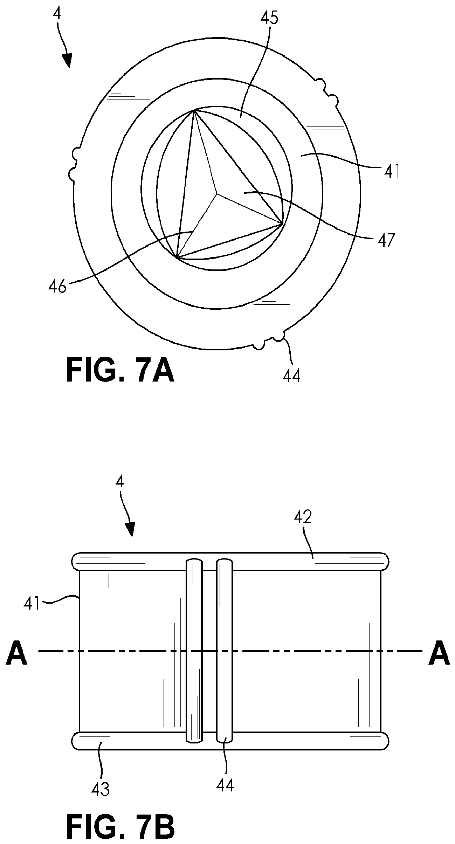

Figures 7 (a) and (b) show the self-sealing bidirectional valve 4 in more detail. In this particular embodiment, the valve 4 may comprise an annular side wall 41 configured to be insertable into a corresponding housing 5 of the coupling member 6. The side wall 41 may comprise at lip members 42, 43 to allow better positioning of the valve 4 within the housing 5.

The side wall 41 may further comprise at least two elongated side protrusions 44 to also provide for better positioning and retention of the valve 4 inside the housing 5. A resilient membrane 45 of the valve 4 is provided with three radially arranged slits 46 forming flaps 47. At a predetermined fluid pressure, the flaps 47 open and the fixative liquid passes through the valve 4.

However, it is understood by the person skilled in the art that any suitable number of slits and flaps may be used to provide a bidirectional valve that is actuatable at a predetermined fluid pressure. It is understood that the slits are formed by cutting through the membrane 45 without removing any material therefrom.

When in a closed position, the flaps 47 abut closely to one another, preventing leakage of the liquid therethrough. In order to open the valve 4, a suitable pressure is applied to the resilient walls of one of the receptacles 1, 2 increasing the internal fluid pressure and forcing the liquid through the valve 4 by pushing the flaps 47 outwardly into the direction of the other receptacle 1, 2.

When the pressure is released, the resilient flaps 47 of the membrane 45 move back to a flat closed position, thus preventing fluid to pass through. The valve 4 may be made of a resilient inert material, such as silicone, though, any other suitable resilient thermoplastic polymers can be used.

The coupling member 6 of the example embodiment comprises an internal thread 10 adapted to lockingly engage with a corresponding threaded neck 7, 8 of a respective receptacle 1, 2.

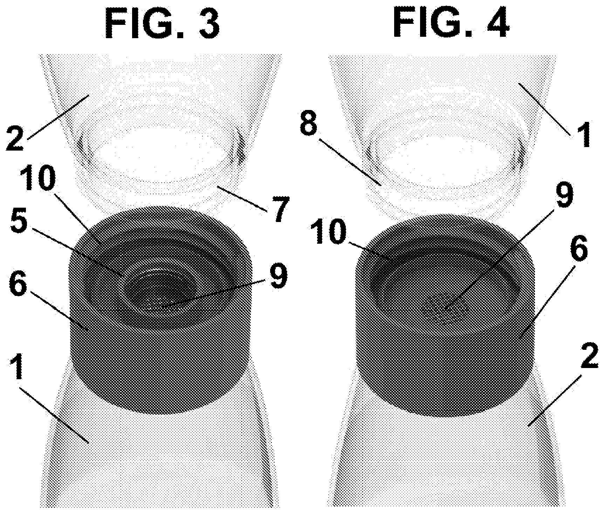

Furthermore, as shown in Figures 3 and 4, the coupling member 6 is provided with a barrier member or grid 9. The barrier member or grid 9 is configured to prevent a biological sample from passing into the second receptacle 2, but at the same time, allowing the fixative liquid 3 to move between the first and second receptacle 1, 2.

The barrier member or grid 9 may have a pre-determined mesh size chosen in such a way that the biopsy specimen (e.g. taken from a patient) cannot pass through the openings of the grid 9. Preferably, the mesh size is between 100 and 1000 microns, as this size is sufficient to retain most biological samples received for tissue processing. However, any other suitable mesh size may be used.

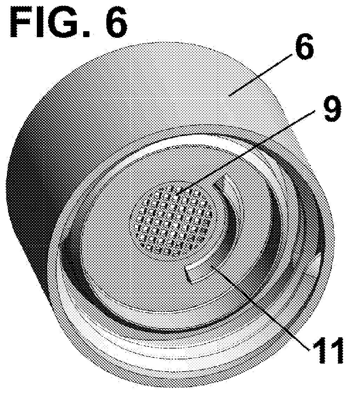

The barrier member 9 of the coupling member 6 may comprise a protrusion 11 (see Figure 6) to assist in depositing a sample onto the barrier member or grid 9. In this particular example, the protrusion 11 has a substantially triangular cross-section so as to form a sharp edge, though, other shapes suitable for efficient biological sample collection and retention may be used. Furthermore, the protrusion 11 may be any suitable shape, e.g. the protrusion may extend annularly around at least a portion of the grid 9 .

Furthermore, as shown in Figures 1 and 5, one end (e.g. the bottom end) of the first and second receptacle 1, 2 may be wider than the rest of the receptacle 1, 2. Having a receptacle 1, 2 with a wider (bottom) provides a more stable position when placed on a horizontal surface.

The operation of the container assembly according to the present invention is as follows:
Before its use, the fixative liquid 3 is placed in the second receptacle 2 of the container assembly (see Figure 5), such that the fixative liquid 3 is only in the second receptacle 2. When placing a biological sample into the first receptacle 1, the first receptacle 1 is unscrewed from the coupling member 6 and the biological sample is placed onto the grid 9 (see Figure 4). The protrusion 11 (Figure 6) helps to deposit the sample.

Once the biological sample is placed on the grid 9 (see Figure 4) and at least temporarily retained by the protrusion 11, the first receptacle 1 is screwed back onto the coupling member 6. The position of the container assembly may now be inversed and the fixative liquid 3 is pushed from the second receptacle 2 into the first receptacle 1 via the self-sealing dispensing valve 4, by deforming (e.g. pressing) the walls of the receptacle 2. This way, the biological sample will be immersed into the fixative liquid for its conservation during transportation.

In order to remove the biological sample from the container assembly, the above-mentioned operation is simply reversed, i.e. first the fixative liquid 3 is transferred from the first receptacle 1 into the second receptacle 2 by lightly pressing the walls of receptacle 1. Once the liquid is fully moved into the second receptacle 2, the first receptacle 1 can be unscrewed from the coupling member 6 to access the sample.

Typically, the biological sample will be located on the grid 9 (see Figure 4) from where it can be easily removed.

As a result, the biological sample can be transported immersed within the fixative liquid for its conservation, while the user is protected from getting into contact with the fixative liquid 3, in particular, when placing the sample into one of the receptacles 1, 2 of the container assembly, and when removing the sample from one of the receptacles 1, 2 of the container assembly.

## Claims

1. A container assembly for handling a biological sample, comprising:
a first receptacle (1) and a second receptacle (2), each one configured to receive and contain a fluid;
a coupling member (6), adapted to operably couple said first receptacle and said second receptacle, so as to provide a sealed fluid passage between said first and second receptacle;
at least one self-sealing dispensing valve (4), operably mounted within said fluid passage of said coupling member, adapted to allow bi-directional fluid flow at a predetermined fluid pressure, and
at least one barrier member (9), operably mounted within said fluid passage of said coupling member at an output of said first receptacle, configured to prevent solids of a predetermined size to pass from said first receptacle into said second receptacle,
wherein said at least one self-sealing dispensing valve comprises a resilient membrane having at least one substantially central slit adapted to open at a predetermined fluid pressure.

2. A container assembly according to claim 1, wherein said barrier member further comprises a protrusion (11) extending from a surface facing said first receptacle that is adapted to receive and position the biological sample when placing the biological sample onto said at least one barrier member.

3. A container assembly according to claim 2, wherein said protrusion has a sharp-edged substantially triangular cross-section.

4. A container assembly according to any one of the preceding claims, wherein said first receptacle and said second receptacle are at least partially made of a resiliently deformable material.

5. A container assembly according to claim 4, wherein said resiliently deformable material is a polymer.

6. A container assembly according to claim 5, wherein said polymer is any one of polyethylene terephthalate, high-density polyethylene and polyvinyl chloride.

7. A container assembly according to any one of the preceding claims, wherein any one of said first and said second receptacles is made from a transparent material.

8. A container assembly according to any one of the preceding claims, wherein said coupling member comprises a threaded inner surface adapted to mountably engage with a corresponding threaded outer surface of said first and second receptacle.

9. A container assembly according to any one of the preceding claims, wherein said coupling member further comprises an internal housing configured to retainingly receive said at least one self-sealing dispensing valve.

10. A container assembly according to any one of the preceding claims , wherein said membrane comprises at least three slits radially arranged so as to form three resilient flaps adapted to open at a predetermined fluid pressure.

11. A container assembly according to any one of the preceding claims, wherein said at least one self-sealing dispensing valve is made from a resilient silicone material.

12. A container assembly according to any one of the preceding claims, wherein said barrier member is a grid having a predetermined grid spacing.

13. The container assembly according to claim 12, wherein said protrusion is located adjacent to said grid.

## Patentansprüche

1. Behälteranordnung zum Handhaben einer biologischen Probe, aufweisend:
ein erstes Behältnis (1) und ein zweites Behältnis (2), die jeweils zum Aufnehmen und Enthalten eines Fluids konfiguriert sind;
ein Kopplungselement (6), das ausgelegt ist, das erste Behältnis und das zweite Behältnis miteinander betriebsfähig zu koppeln, um einen abgedichteten Fluiddurchgang zwischen dem ersten und dem zweiten Behältnis vorzusehen;
zumindest ein selbstdichtendes Abgabeventil (4), das innerhalb des Fluiddurchgangs des Kopplungselements betriebsfähig montiert und zum Ermöglichen einer bidirektionalen Fluidströmung bei einem vorgegebenen Fluiddruck ausgelegt ist, und
zumindest ein Sperrelement (9), das innerhalb des Fluiddurchgangs des Kopplungselements an einem Ausgang des ersten Behältnisses betriebsfähig montiert und zum Verhindern des Durchtritts von Feststoffen einer vorgegebenen Größe aus dem ersten Behältnis in das zweite Behältnis konfiguriert ist,
wobei das zumindest eine selbstdichtende Abgabeventil eine elastische Membran aufweist, die zumindest einen im Wesentlichen zentralen Schlitz aufweist, der zum Öffnen bei einem vorgegebenen Fluiddruck ausgelegt ist.

2. Behälteranordnung nach Anspruch 1, wobei das Sperrelement ferner einen sich von einer dem ersten Behältnis zugewandten Fläche aus erstreckenden Vorsprung (11) aufweist, der zum Aufnehmen und Anordnen der biologischen Probe ausgelegt ist, wenn die biologische Probe auf dem zumindest einen Sperrelement angeordnet wird.

3. Behälteranordnung nach Anspruch 2, wobei der Vorsprung einen scharfkantigen, im Wesentlichen dreieckigen Querschnitt aufweist.

4. Behälteranordnung nach einem der vorhergehenden Ansprüche, wobei das erste Behältnis und das zweite Behältnis zumindest teilweise aus einem elastisch verformbaren Material hergestellt sind.

5. Behälteranordnung nach Anspruch 4, wobei das elastisch verformbare Material ein Polymer ist.

6. Behälteranordnung nach Anspruch 5, wobei das Polymer eines ist von Polyethylenterephthalat, hochdichtem Polyethylen und Polyvinylchlorid.

7. Behälteranordnung nach einem der vorhergehenden Ansprüche, wobei eines des ersten und des zweiten Behältnisses aus einem transparenten Material hergestellt ist.

8. Behälteranordnung nach einem der vorhergehenden Ansprüche, wobei das Kopplungselement eine mit einem Gewinde versehene Innenfläche aufweist, die zum montierbaren Eingreifen mit einer entsprechenden mit einem Gewinde versehenen Außenfläche des ersten und zweiten Behältnisses ausgelegt ist.

9. Behälteranordnung nach einem der vorhergehenden Ansprüche, wobei das Kopplungselement ferner ein Innengehäuse aufweist, das zum zurückhaltenden Aufnehmen des zumindest einen selbstdichtenden Abgabeventils konfiguriert ist.

10. Behälteranordnung nach einem der vorhergehenden Ansprüche, wobei die Membran zumindest drei radial angeordnete Schlitze aufweist, um drei elastische Klappen zu bilden, die zum Öffnen bei einem vorgegebenen Fluiddruck ausgelegt sind.

11. Behälteranordnung nach einem der vorhergehenden Ansprüche, wobei das zumindest eine selbstdichtende Abgabeventil aus einem elastischen Silikonmaterial hergestellt ist.

12. Behälteranordnung nach einem der vorhergehenden Ansprüche, wobei das Sperrelement ein Gitter ist, das einen vorgegebenen Gitterabstand aufweist.

13. Behälteranordnung nach Anspruch 12, wobei sich der Vorsprung angrenzend an das Gitter befindet.

## Revendications

1. Ensemble récipient pour la manipulation d'un échantillon biologique, comprenant :
un premier réceptacle (1) et un deuxième réceptacle (2), chacun configuré pour recevoir et contenir un fluide ;
un élément de couplage (6), adapté pour coupler de manière opérationnelle ledit premier réceptacle et ledit deuxième réceptacle, de manière à fournir un passage de fluide étanche entre lesdits premier et deuxième réceptacles ;
au moins une valve de distribution auto-obturante (4), montée de manière opérationnelle à l'intérieur dudit passage de fluide dudit élément de couplage, adaptée pour permettre un écoulement de fluide bidirectionnel à une pression de fluide prédéterminée, et
au moins un élément barrière (9), monté de manière opérationnelle à l'intérieur dudit passage de fluide dudit élément de couplage sur une sortie dudit premier réceptacle, configuré pour empêcher des solides d'une taille prédéterminée de passer dudit premier réceptacle dans ledit deuxième réceptacle,
dans lequel ladite au moins une valve de distribution auto-obturante comprend une membrane élastique ayant au moins une fente sensiblement centrale adaptée pour s'ouvrir à une pression de fluide prédéterminée.

2. Ensemble récipient selon la revendication 1, dans lequel ledit élément de barrière comprend en outre une saillie (11) s'étendant à partir d'une surface faisant face audit premier réceptacle qui est adaptée pour recevoir et positionner l'échantillon biologique lors du placement de l'échantillon biologique sur ledit au moins un élément de barrière.

3. Ensemble récipient selon la revendication 2, dans lequel ladite saillie a une section transversale sensiblement triangulaire à arêtes vives.

4. Ensemble récipient selon l'une quelconque des revendications précédentes, dans lequel ledit premier réceptacle et ledit deuxième réceptacle sont au moins partiellement fabriqués en un matériau élastiquement déformable.

5. Ensemble récipient selon la revendication 4, dans lequel ledit matériau élastiquement déformable est un polymère.

6. Ensemble récipient selon la revendication 5, dans lequel ledit polymère est l'un quelconque parmi du polyéthylène téréphtalate, du polyéthylène haute densité et du chlorure de polyvinyle.

7. Ensemble récipient selon l'une quelconque des revendications précédentes, dans lequel l'un quelconque parmi lesdits premier et deuxième réceptacles est fabriqué à partir d'un matériau transparent.

8. Ensemble récipient selon l'une quelconque des revendications précédentes, dans lequel ledit élément d'accouplement comprend une surface interne filetée adaptée pour s'engager de manière montable avec une surface externe filetée correspondante desdits premier et deuxième réceptacles.

9. Ensemble récipient selon l'une quelconque des revendications précédentes, dans lequel ledit élément d'accouplement comprend en outre un logement interne configuré pour recevoir de manière retenue ladite au moins une valve de distribution auto-obturante.

10. Ensemble récipient selon l'une quelconque des revendications précédentes, dans lequel ladite membrane comprend au moins trois fentes agencées radialement de manière à former trois volets élastiques adaptés pour s'ouvrir à une pression de fluide prédéterminée.

11. Ensemble récipient selon l'une quelconque des revendications précédentes, dans lequel ladite au moins une valve de distribution auto-obturante est fabriquée à partir d'un matériau de silicone élastique.

12. Ensemble récipient selon l'une quelconque des revendications précédentes, dans lequel ledit élément barrière est une grille ayant un espacement de grille prédéterminé.

13. Ensemble récipient selon la revendication 12, dans lequel ladite saillie est située de adjacente à ladite grille.
